Europäisches Patentamt

European Patent Office

Office européen des brevets

(11) Veröffentlichungsnummer: **0 288 694**
**A1**

## (12) EUROPÄISCHE PATENTANMELDUNG

(21) Anmeldenummer: 88103471.4

(22) Anmeldetag: 05.03.88

(51) Int. Cl.⁴: **F16D 3/84**

(30) Priorität: 30.04.87 DE 8706220 U

(43) Veröffentlichungstag der Anmeldung:
02.11.88 Patentblatt 88/44

(84) Benannte Vertragsstaaten:
**AT DE ES FR GB IT SE**

(71) Anmelder: **Möller Werke GmbH
Auf dem Kupferhammer
D-4800 Bielefeld 14(DE)**

(72) Erfinder: **Tadych, Ingo
Culemannstrasse 11
D-4800 Bielefeld 1(DE)**

(74) Vertreter: **Patentanwälte Dipl.-Ing. Bodo
Thielking Dipl.-Ing. Otto Elbertzhagen
Gadderbaumer Strasse 20
D-4800 Bielefeld 1(DE)**

(54) **Achsgelenk mit Achsmanschette.**

(57) Auf einem Achsgelenk (1) ist eine Achsman-schette (2) vorgesehen, deren Schaftstück (2a) einen Befestigungsbereich des Achsgelenks (1) umgreift und mittels einer Klemmschelle (3) darauf fixiert ist. Der Befestigungsbereich des Achsgelenks (1) besitzt mindestens zwei gegenüber den benachbarten Außenflächen nach außen vorstehende umlaufende Rip-pen. Die Ausbildung des Achsgelenks mit Achsman-schette schafft eine dichte Verbindung zwischen die-sen beiden Teilen ohne Dichtlippen, deren Vorsehen einen hohen Fertigungsaufwand für die Achsman-schette verlangt.

FIG. 2

FIG. 1

EP 0 288 694 A1

## Achsgelenk mit Achsmanschette

Die Erfindung betrifft ein Achsgelenk mit einer Achsmanschette, deren Schaftstück einen Befestigungsbereich des Achsgelenks umgreift und mittels einer Klemmschelle darauf fixiert ist.

Bei einer bekannten Vorrichtung dieser Art (DE-GM 83 35 598) sind auf der Innenseite des Schaftstücks Halte-und Dichtlippen angeordnet, welche mit einer Klemmschelle auf den zylindrischen Befestigungsbereich des Achsgelenks gepreßt werden. Das Vorsehen von Dichtlippen auf der Innenseite des Schaftstücks erfordert eine vergleichsweise aufwendige Herstellungstechnik.

Ausgehend von diesem Stand der Technik liegt der Erfindung die Aufgabe zugrunde, eine Vorrichtung der als bekannt vorausgesetzten Art zu - schaffen, welche eine dichte Verbindung zwischen Achsmanschette und Achsgelenk auch ohne an das Schaftstück angeformte Dichtlippen schafft.

Die Lösung dieser Aufgabe erfolgt erfindungsgemäß dadurch, daß der Befestigungsbereich des Achsgelenks mindestens zwei gegenüber den benachbarten Außenflächen nach außen vorstehende umlaufende Rippen aufweist.

Dabei hat es sich als zweckmäßig erwiesen, daß im Befestigungsbereich eine umlaufend angeordnete Nut vorgesehen ist, in der eine innen umlaufend angeordnete Wulst des Schaftstücks liegt.

Schließlich wird erfindungsgemäß noch vorgeschlagen, daß die Nut zwischen den beiden Rippen angeordnet ist.

Bei der Erfindung wird eine einwandfreie Dichtung zwischen Achsmanschette und Achsgelenk trotz des Verzichts auf innenliegende Dichtlippen erzielt. Die einzusetzende Achsmanschette ist günstiger und mit geringeren Toleranzanforderungen herstellbar als die bekannte Achsmanschette. Durch das Vorsehen von zwei umlaufenden Rippen wird ein hoher spezifischer Anpreßdruck zwischen den aneinanderliegenden Dichtflächen erreicht.

Nachstehend wird eine bevorzugte Ausführungsform der Erfindung anhand der Zeichnung im einzelnen beschrieben. Es zeigen:

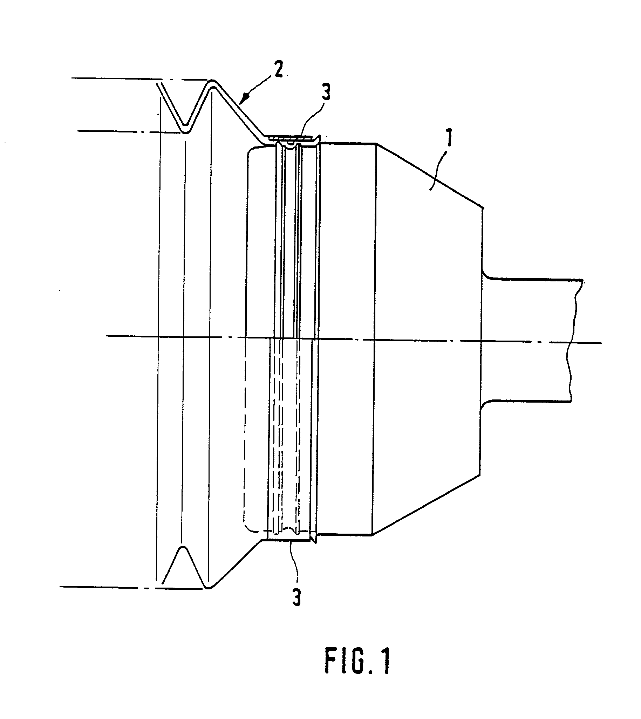

Figur 1 - eine teilweise geschnittene Teilansicht eines Achsmanschettenbereichs und eines Achsgelenkbereichs,

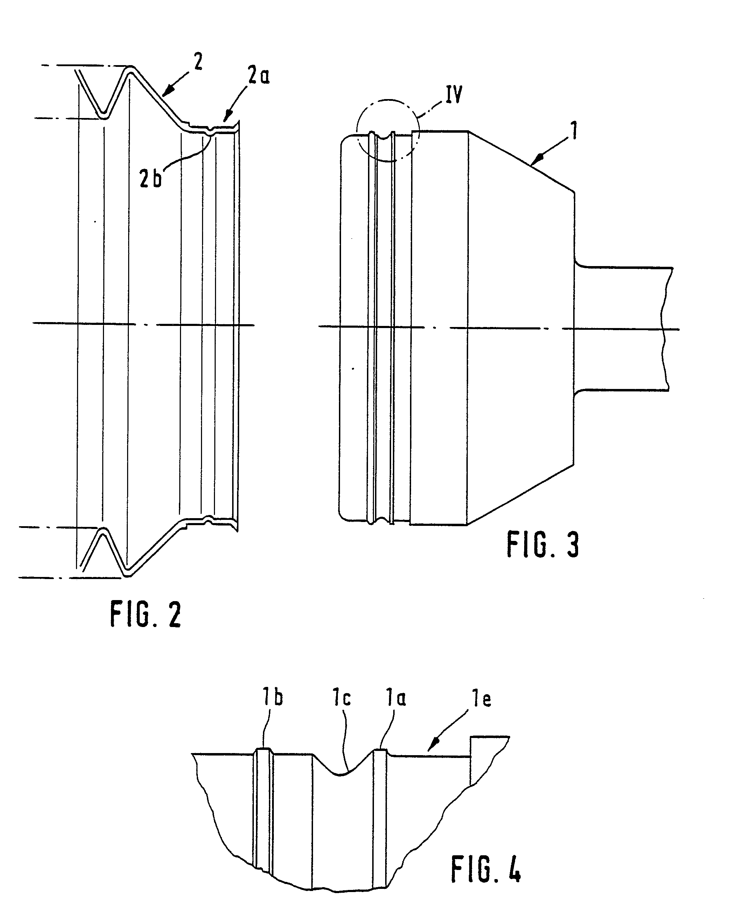

Figur 2 - einen Längsschnitt durch einen Teil der Achsmanschette,

Figur 3 - eine Ansicht eines Teils des Achsgelenks,

Figur 4 die mit IV gekennzeichnete Einzelheit bei Figur 3 in vergrößerter Darstellung.

Das Achsgelenk ist mit 1 bezeichnet und besitzt einen Befestigungsbereich 1e, der gegenüber dem übrigen Bereich abgesetzt ist. In dem Befestigungsbereich sind zwei mit Abstand zueinander angeordnete, nach außen vorstehende umlaufende Rippen 1a und 1b vorgesehen. Zwischen den beiden Rippen 1a und 1b befindet sich eine umlaufend angeordnete Nut 1c.

Die Achsmanschette 2, die als Balgmanschette ausgebildet ist, besitzt ein Schaftstück 2a, in dem eine nach innen umlaufend angeordnete Wulst 2b vorgesehen ist. Im montierten Zustand greift die Wulst 2b in die Nut 1c ein. Durch die Klemmschelle 3 wird das Schaftstück mit hoher Flächenpressung gegen die Rippen 1a und 1b gedrückt. Auf diese Weise ist die erforderliche Dichtigkeit gewährleistet.

## Ansprüche

1. Achsgelenk mit Achsmanschette, deren Schaftstück einen Befestigungsbereich des Achsgelenks umgreift und mittels einer Klemmschelle darauf fixiert ist,
dadurch gekennzeichnet,
daß der Befestigungsbereich (1e) des Achsgelenks (1) mindestens zwei gegenüber den benachbarten Außenflächen nach außen vorstehende umlaufende Rippen (1a und 1b) aufweist.

2. Achsmanschette nach Anspruch 1,
dadurch gekennzeichnet,
daß im Befestigungsbereich (1e) eine umlaufend angeordnete Nut (1c) vorgesehen ist, in der eine innen umlaufend angeordnete Wulst (2b) des Schaftstücks (2a) liegt.

3. Achsgelenk nach Ansprüchen 1 und 2,
dadurch gekennzeichnet,
daß die Nut (1c) zwischen den beiden Rippen (1a und 1b) angeordnet ist.

FIG.1

FIG. 2

FIG. 3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 554 533 (GLAENZER-SPICER) <br> * Seite 6, Zeilen 9-25; Figuren 3,4 * <br> --- | 1-3 | F 16 D 3/84 |
| P,A | FR-A-2 592 111 (RENAULT) <br> * Figuren 6-8 * <br> --- | 1-3 | |
| P,A | FR-A-2 592 110 (RENAULT) <br> * Seite 2, Zeilen 19-25; Figur 1 * <br> ----- | 1-3 | |

| | RECHERCHIERTE SACHGEBIETE (Int. Cl.4) |
|---|---|
| | F 16 D <br> F 16 J |

Der vorliegende Recherchenbericht wurde für alle Patentansprüche erstellt

| Recherchenort | Abschlußdatum der Recherche | Prüfer |
|---|---|---|
| DEN HAAG | 03-08-1988 | ORTHLIEB CH.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)